# DEMANDE DE BREVET EUROPEEN

(11) **EP 1 564 435 A1**
(43) Date de publication de la demande: **17.08.2005**
(21) Numéro de dépôt: 05290265.7
(22) Date de dépôt: 07.02.2005
(51) Int. Cl.: F16F 15/131

(54) **Dispositif de butée axiale de volant d'inertie**

(30) Priorité: 11.02.2004 FR 0401358
(71) Demandeur: Aktiebolaget SKF, 415 50 Göteborg (SE)
(72) Inventeur: Arnault, Benoit, 37540 Saint-Cyr-sur-Loire (FR)
(74) Mandataire: Casalonga, Axel

(57) **Abrégé**

Dispositif de butée axiale 4 de volant d'inertie, comprenant un roulement pourvu de bagues intérieure 8 et extérieure 7 d'épaisseurs sensiblement constantes, disposé entre deux plateaux dudit volant d'inertie.

## Description

La présente invention concerne le domaine des volants d'inertie à deux masses généralement munis d'amortisseurs d'oscillations de torsion.

Ces volants bi-masse sont montés entre le vilebrequin d'un moteur à combustion interne et la boîte de vitesses afin de découpler la boîte de vitesses des vibrations et oscillations de torsion dues en particulier aux acyclismes dudit moteur. Le volant comporte deux disques ou plateaux montés l'un à côté de l'autre et de façon concentrique au moyen d'un palier radial et d'un palier axial. Les plateaux primaire et secondaire sont angulairement liés par des ressorts d'amortissement de torsion. L'ensemble des deux plateaux tourne en rotation autour d'un axe commun, le plateau secondaire pouvant se déplacer angulairement dans une certaine plage angulaire limitée par rapport au plateau primaire lors de l'amortissement des oscillations.

De tels dispositifs sont connus par les documents FR 2 833 670 ou FR 2 815 685.

Dans ces dispositifs, la pièce formant palier axial est une bague de friction réalisée en matériau synthétique.

Or, la demanderesse s'est aperçue que la friction se produisant dans le palier axial est une source supplémentaire de bruit. Par ailleurs, il se produit une usure de la bague de friction pouvant produire des conséquences néfastes telles qu'une prise de jeu, des vibrations, etc.

L'invention propose une butée pour volant d'inertie silencieuse, compacte, et de durée de vie élevée.

Le dispositif de butée axiale, selon un aspect de l'invention, est destiné à un volant d'inertie et comprend un roulement pourvu de bagues d'épaisseur sensiblement constante en tôle, et disposé entre deux plateaux du volant d'inertie. Des éléments roulants sont disposés entre les bagues. On bénéficie ainsi d'une butée axiale particulièrement silencieuse. On peut prévoir des bagues dont les pistes de roulement sont décalées radialement, l'une vers l'extérieur et l'autre vers l'intérieur, formant ainsi une bague extérieure et une bague intérieure.

Dans un mode de réalisation de l'invention, le roulement comprend un manchon d'appui en contact avec la bague intérieure. La bague extérieure peut comprendre des moyens de retenue axiale du manchon, lesdits moyens étant intégrés ou rapportés sur la bague extérieure. Lesdits moyens peuvent comprendre un ou plusieurs ergots de retenue axiale obtenus par déformation de la matière de la bague extérieure. Lesdits moyens peuvent également se présenter sous la forme d'un rebord radial d'une pièce fixée sur la bague extérieure et prévus pour interférer radialement avec le manchon.

Le manchon peut être pourvu d'une face avant en concordance de forme avec la surface arrière de la bague intérieure, du côté opposé aux éléments roulants. Le manchon peut ainsi reprendre les efforts axiaux de la bague intérieure, cette dernière pouvant être réalisée à partir d'une tôle de faible épaisseur dont la déformation sera évitée par le manchon.

Le manchon peut comprendre une surface d'appui sensiblement radiale venant en contact avec une surface rapportée ou intégrée à un plateau de volant d'inertie. Ladite surface d'appui sensiblement radiale est disposée du côté opposé à la bague intérieure et permet une transmission des efforts axiaux du manchon sur le plateau du volant d'inertie.

Le manchon peut comprendre des moyens de centrage de la butée sur une portion rapportée ou intégrée à un plateau de volant d'inertie. Lesdits moyens de centrage peuvent se présenter sous la forme d'une protubérance annulaire issue du manchon, ou d'une pluralité de protubérances discontinues également issues du manchon, ou encore d'un rebord d'un insert du manchon.

Avantageusement, la bague extérieure comprend une portion frontale sensiblement radiale sur laquelle viennent se raccorder une portion axiale cylindrique extérieure et une portion axiale cylindrique intérieure. La portion axiale cylindrique intérieure est d'un diamètre inférieur à l'alésage de la bague intérieure et s'étend dans la même direction que la portion axiale cylindrique extérieure pour recouvrir axialement au moins en partie la bague intérieure. La portion axiale cylindrique intérieure de la bague extérieure comprend au moins un ergot en saillie vers l'extérieur disposé à proximité de l'extrémité libre de la portion axiale intérieure.

Le roulement peut comprendre un flasque en contact avec la surface extérieure de la portion axiale extérieure de la bague extérieure et pourvu d'un rebord s'étendant radialement vers l'intérieur. Le rebord du flasque dirigé vers l'intérieur peut former un passage étroit avec le manchon et/ou avec la bague intérieure. Le flasque peut comprendre en outre une portion sensiblement radiale en contact avec la portion frontale de la bague extérieure. On améliore ainsi l'étanchéité du roulement, ce qui lui permet de conserver plus longtemps le lubrifiant disposé à proximité des éléments roulants et d'augmenter la durée de fonctionnement dudit roulement.

Le flasque peut comprendre en outre une portion axiale s'étendant parallèlement à la portion axiale intérieure de la bague extérieure, et un rebord d'extrémité dirigé radialement vers l'extérieur, le rebord étant apte à former un moyen de retenue axiale d'éléments disposés dans la bague extérieure.

Dans un mode de réalisation de l'invention, le flasque comprend un joint souple venant en contact avec la bague intérieure. Le joint souple forme une étanchéité dynamique frottante.

Dans un mode de réalisation de l'invention, le manchon comprend un insert métallique en contact avec un plateau du volant d'inertie. On évite ainsi une éventuelle déformation du manchon en cas d'efforts axiaux importants.

Avantageusement, le roulement comprend une cage de maintien circonférentiel des éléments roulants, ladite cage étant pourvue d'un talon annulaire délimité axialement par deux faces parallèles et disposé radialement à l'intérieur de la rangée d'éléments roulants.

Le roulement peut être dépourvu de cage, les éléments roulants étant sensiblement jointifs. On évite ainsi une déformation de la cage par effet centrifuge, grâce à la rigidité conférée par une portion annulaire étendue radialement.

L'invention propose également un volant d'inertie comprenant deux plateaux et une butée axiale disposée entre lesdits deux plateaux, la butée axiale comprenant un roulement pourvu de bagues intérieure et extérieure d'épaisseur sensiblement constante. Les bagues du roulement peuvent être réalisées par découpe et emboutissage d'un flan de tôle, ce qui s'avère particulièrement économique et permet de réaliser des bagues de faible masse pouvant, si nécessaire, présenter des formes relativement complexes. Les bagues en tôle présentent une épaisseur sensiblement constante, y compris au droit des chemins de roulement. En cas de chemin de roulement concave de rayon rᵢ en section méridienne, la bague d'épaisseur constante e est pourvue du côté opposé d'une surface convexe de rayon rₑ en section méridienne, avec rₑ = rᵢ +e. Les bagues en tôle peuvent être obtenues à coût raisonnable, sans enlèvement de copeaux, d'où un gain de matière première et une réduction des déchets à recycler.

La présente invention sera mieux comprise à l'étude de la description détaillée de quelques modes de réalisation pris à titre d'exemples nullement limitatifs et illustrés par les dessins annexés, sur lesquels:
- la figure 1 est une vue en coupe axiale d'un volant d'inertie, selon un aspect de l'invention;
- la figure 2 est une demi-vue en coupe axiale de la butée du volant d'inertie de la figure 1;
- les figures 3 à 9 sont des demi-vues en coupe axiale de butées selon d'autres modes de réalisation de l'invention; et
- la figure 10 est une vue en coupe axiale d'un volant d'inertie, selon un autre aspect de l'invention.

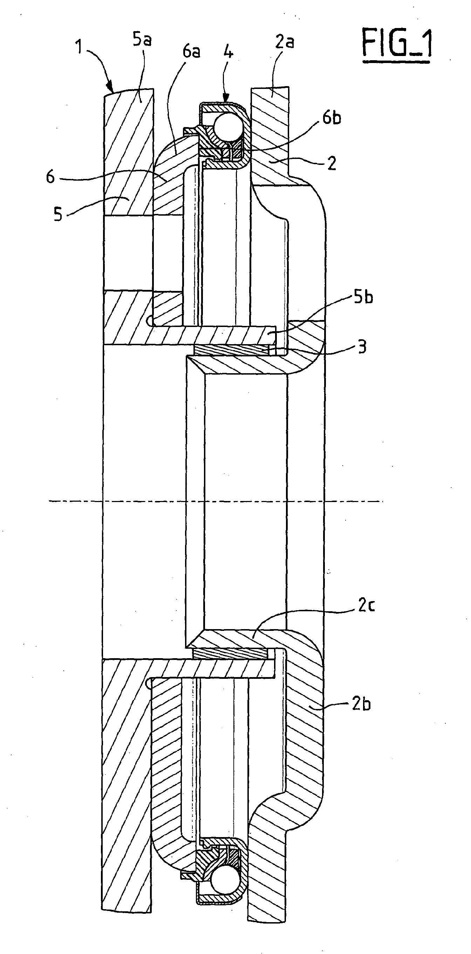

Comme on peut le voir sur la figure 1, un volant d'inertie comprend un plateau primaire 1, un plateau secondaire 2, un palier radial 3 et une butée axiale 4.

Le plateau primaire 1 comprend une pièce de base 5 annulaire et une interface 6, la pièce de base 5 étant pourvue d'une portion radiale 5a et d'une portion axiale 5b monoblocs, la portion axiale 5b s'étendant à partir de l'extrémité de petit diamètre de la portion radiale 5a. Le palier radial 3 est monté dans l'alésage de la portion axiale 5b. L'interface 6 est monté en contact avec la surface extérieure de la portion axiale 5b et avec l'une des faces radiales de la portion radiale 5a. L'interface 6 se présente sous la forme d'un anneau en tôle de forme générale radiale présentant à son extrémité de grand diamètre un court rebord axial 6a dirigé à l'opposé de la portion radiale 5a et se terminant par une surface sensiblement radiale 6b.

Le plateau secondaire 2 annulaire comprend une portion radiale de grand diamètre 2a, une portion radiale de petit diamètre 2b axialement légèrement décalée par rapport à la portion radiale de grand diamètre 2a et une portion axiale 2c s'étendant à partir de l'extrémité de petit diamètre de la portion radiale 2b. Le palier radial 3 est disposé sur la surface extérieure de la portion axiale 2c qui présente donc un diamètre inférieur à celui de la portion radiale 5b de la pièce de base 5 du plateau primaire 1. La butée axiale 4 est disposée entre l'interface 6 du plateau primaire 1 et la face radiale de la portion radiale 2a du plateau secondaire 2 disposée du côté de la portion axiale 2c.

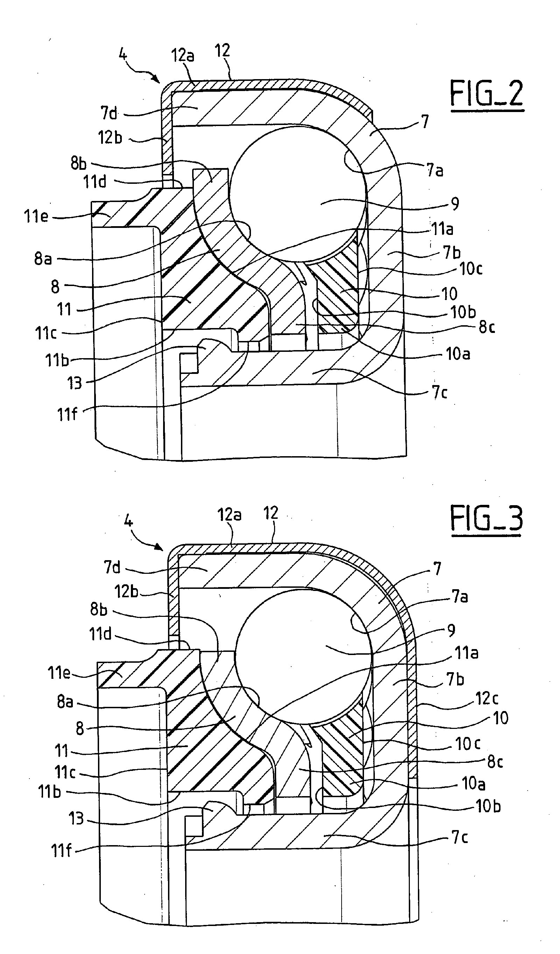

Plus particulièrement et comme on le voit mieux sur la figure 2, la butée axiale 4 comprend une bague extérieure 7, une bague intérieure 8 d'épaisseurs sensiblement constantes réalisées par emboutissage d'un flan de tôle mince, une pluralité d'éléments roulants 9, ici des billes, disposés entre un chemin de roulement 7a formé sur la bague extérieure 7 et un chemin de roulement 8a formé sur la bague intérieure 8, une cage 10 en matériau synthétique, un manchon 11, également en matériau synthétique, en contact avec la bague intérieure 8 et un flasque 12 fixé sur la bague extérieure 7 et participant à l'étanchéité de la butée axiale 4. La bague extérieure 7 comprend une paroi radiale 7b, une paroi axiale intérieure 7c et une paroi axiale extérieure 7d monoblocs et se raccordant par des zones arrondies, le raccordement entre la paroi radiale 7b et la paroi axiale extérieure 7d présentant une forme toroïdale permettant de former la piste de roulement 7a.

En d'autres termes, l'alésage de la paroi axiale extérieure 7b est adjacent aux éléments roulants 9. Il en va de même de la surface radiale de la paroi radiale 7b adjacente auxdits éléments roulants 9. Les parois axiales intérieure 7c et extérieure 7d s'étendent dans la même direction à partir de la paroi radiale 7b.

Le flasque 12 est en contact avec la paroi axiale extérieure 7d et comprend une portion principale 12a sensiblement axiale et une paroi radiale 12b dirigée vers l'intérieur à partir de la portion 12a. La portion radiale 12b est rabattue sur l'extrémité libre de la paroi axiale extérieure 7d. L'extrémité de la portion principale 12a du côté opposé à la portion radiale 12b est repliée sur la zone arrondie de la bague extérieure 7 raccordant la paroi axiale extérieure 7d et la paroi radiale 7b. Le flasque 12 est ainsi solidaire de la bague extérieure 7 par concordance de forme et serrage.

La bague intérieure 8 comprend une paroi toroïdale 8b sur la face concave de laquelle est formée la piste de roulement 8a pour les éléments roulants 9, et une courte paroi radiale 8c dirigée vers l'intérieur à partir de la paroi toroïdale 8b. La bague intérieure 8 est disposée dans l'espace défini entre les parois axiales intérieure 7c et extérieure 7d de la bague extérieure 7. La piste de roulement 8a est en contact avec les éléments roulants 9 sur un angle inférieur à 90°, vu en coupe axiale, tandis que la piste de roulement 7a est en contact avec les éléments roulants 9 sur un angle sensiblement égal à 90°.

Les éléments roulants 9 et la cage 10 sont disposés dans l'espace défini entre les bagues 7 et 8. Plus précisément, la cage 10, réalisée en matériau synthétique, comprend un talon annulaire 10a délimité axialement par deux faces radiales parallèles 10b et 10c, ledit talon se prolongeant de façon discontinue entre les éléments roulants 9 pour former une pluralité d'alvéoles 14 permettant de loger les éléments roulants 9. Le talon annulaire 10a de la cage 10 est disposé axialement entre la paroi radiale 7b de la bague extérieure 7 et la paroi radiale 8c de la bague intérieure 8, et radialement entre les éléments roulants 9 et la paroi axiale intérieure 7c de la bague extérieure 7. Le talon annulaire 10a de la cage 10 présente une faible épaisseur dans le sens axial afin de conférer à la butée axiale 4 une compacité satisfaisante et, au contraire, une épaisseur nettement plus importante dans le sens radial pour lequel, d'une part, la compacité présente une importance moindre et, d'autre part, la cage 10 doit présenter une rigidité élevée. En effet, lors des vitesses de rotation élevées, la cage 10 risque de se déformer par centrifugation en accroissant le frottement sur les éléments roulants 9. Une telle déformation est évitée d'une part grâce à la dimension radiale importante du talon annulaire 10a de la cage 10 qui offre une rigidité radiale élevée. D'autre part, la disposition purement radiale du talon 10a par rapport à la couronne de billes permet d'éviter tout risque de « mise en parapluie » de la cage par centrifugation.

La butée axiale 4 se complète par un manchon 11, réalisé entièrement en matériau synthétique, et présentant une forme annulaire. Le manchon 11 présente une surface 11a en concordance de forme avec la bague intérieure 8 du côté opposé à la piste de roulement 8a. La surface 11a s'étend radialement sensiblement de la paroi toroïdale 8b à la paroi radiale 8c de la bague intérieure 8. Le manchon 11 présente également un alésage 11b, de diamètre sensiblement égal à celui de l'extrémité de petit diamètre de la bague intérieure 8, une surface radiale 11c disposée à l'extrémité opposée à la surface 11a et une surface périphérique axiale 11d se raccordant à la surface 11a. La surface périphérique 11d est disposée à faible distance de l'extrémité libre de la portion radiale 12b du flasque 12 avec laquelle un passage étroit assurant une étanchéité est formé.

En outre, le manchon 11 comprend une protubérance axiale annulaire 11e en saillie à partir de la surface radiale 11c sensiblement dans le prolongement de la surface périphérique 11d, et un bourrelet radial 11f en saillie vers l'intérieur à partir de l'alésage 11b à proximité de la bague intérieure 8. Le bourrelet 11f est prévu pour coopérer avec un ou plusieurs ergots 13 faisant partie intégrante de la bague extérieure 7 et qui sont formés par repoussage de matière à l'extrémité libre de la paroi axiale intérieure 7c de la bague extérieure 7. L'ergot 13 est en saillie vers l'extérieur à partir de la paroi axiale intérieure 7c. Le bourrelet 11f est disposé à l'état monté, comme illustré sur la figure 2, axialement entre l'ergot 13 et la paroi radiale 7b de la bague extérieure 7. Entre le bourrelet 11f et la paroi radiale 7b, sont disposées la bague intérieure 8 et la cage 10.

Le montage de la butée axiale 4 peut s'effectuer comme suit. Dans la bague extérieure 7, on vient disposer un ensemble roulant comprenant les éléments roulants 9 et la cage 10, les éléments roulants 9 étant maintenus dans les alvéoles 14 de la cage 10. Puis, on amène la bague intérieure 8 par un mouvement axial, puis le manchon 11 également par un mouvement axial. On forme ensuite les ergots 13 au moyen d'un outil appuyant sur l'extrémité libre de la paroi axiale intérieure 7c de la bague extérieure 7. Le flasque 12 peut être fixé sur la bague extérieure 7, postérieurement au montage de la bague intérieure 8 et du manchon 11. Le flasque 12 peut être amené sous la forme d'une coupelle à section en L par un mouvement axial, la fixation étant assurée par la déformation de l'extrémité libre de la portion principale 12a sur le raccordement arrondi de la bague extérieure 7.

Comme on le voit en particulier sur la figure 1, la paroi radiale 7b de la bague extérieure 7 est en contact avec la portion radiale de grand diamètre 2a du plateau secondaire 2. L'interface 6 du plateau primaire 1 est en contact par la surface radiale d'extrémité 6b de son rebord axial 6a avec la surface radiale 11c du manchon 11, la protubérance annulaire 11e venant entourer ledit rebord axial 6a de l'interface 6 et assurer le centrage du manchon 11, et donc de l'ensemble de la butée axiale 4 sur ledit interface 6.

Dans le mode de réalisation illustré sur la figure 3, les éléments sont semblables à ceux illustrés sur la figure 2, à ceci près que le flasque 12 comprend en outre une portion radiale 12c s'étendant le long de la paroi radiale 7b de la bague extérieure 7, en prolongement de l'extrémité arrondie de la portion principale 12a, tel qu'illustré sur la figure 2. En d'autres termes, le flasque 12 recouvre la paroi axiale extérieure 7d, le raccordement arrondi dont la surface intérieure forme la piste de roulement 7a et la paroi radiale 7b de la bague extérieure 7.

Dans ce mode de réalisation, la butée axiale 4 est en contact avec le plateau secondaire par la portion radiale 12c du flasque 12. On évite ainsi une éventuelle fuite de lubrifiant présent au voisinage des éléments roulants 9 entre la bague extérieure 7 et le flasque 12. En effet, le lubrifiant, même soumis à des forces centrifuges élevées dues à la vitesse, ne peut s'échapper par fuite entre la bague extérieure 7 et le flasque 12.

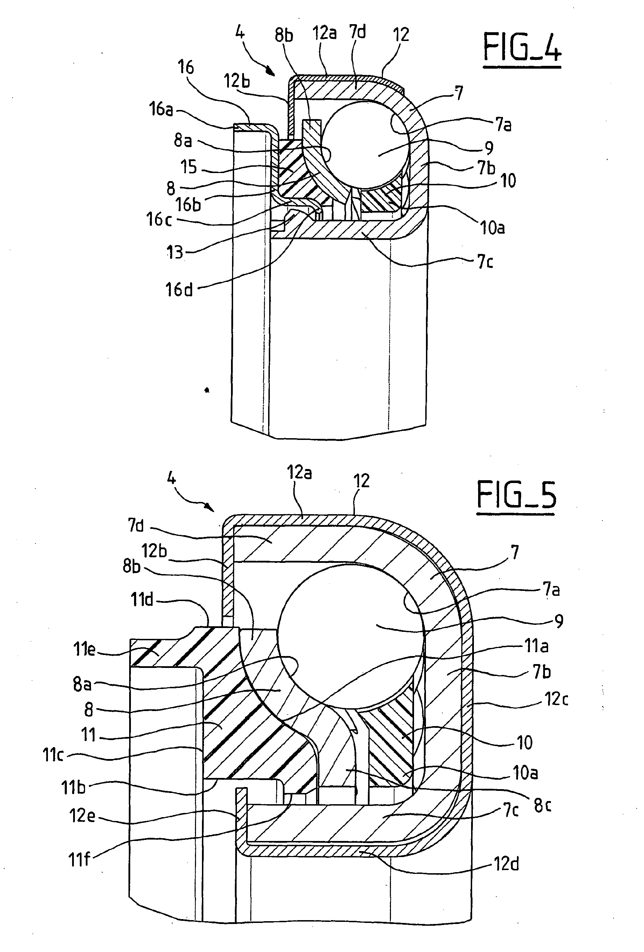

Le mode de réalisation illustré sur la figure 4 se rapproche de celui illustré sur la figure 2, à ceci près que le manchon 11, au lieu d'être réalisé en un bloc de matériau synthétique, comprend une partie 15 en matériau synthétique en contact avec la bague intérieure 8 et un insert métallique 16 sur lequel la partie en matériau synthétique 15 peut être surmoulée. L'insert métallique 16 présente une forme annulaire avec une portion axiale 16a remplaçant la protubérance annulaire 11e pour assurer le centrage de la butée axiale 4 sur le premier plateau 1, une portion radiale 16b s'étendant vers l'intérieur à partir de la portion axiale 16a et disposée entre l'interface 6 et la partie en matériau synthétique 15, une paroi axiale 16c de petit diamètre s'étendant en direction des éléments roulants 9 à partir de l'extrémité de petit diamètre de la portion radiale 16b et se terminant par un rebord oblique 16d dirigé vers l'intérieur et prévu pour interférer avec l'ergot 13, assurant ainsi la retenue axiale des différents éléments de la butée axiale 4. La bague intérieure 8 comporte ici une portion toroïdale 8b dont la surface concave forme la piste de roulement 8a et une portion radiale 8d dirigée vers l'extérieur à partir de la portion toroïdale 8b. La cage 10 bénéficie donc d'un espace axial plus important, le talon annulaire 10a de la cage 10 étant plus épais axialement que dans les modes de réalisation précédents.

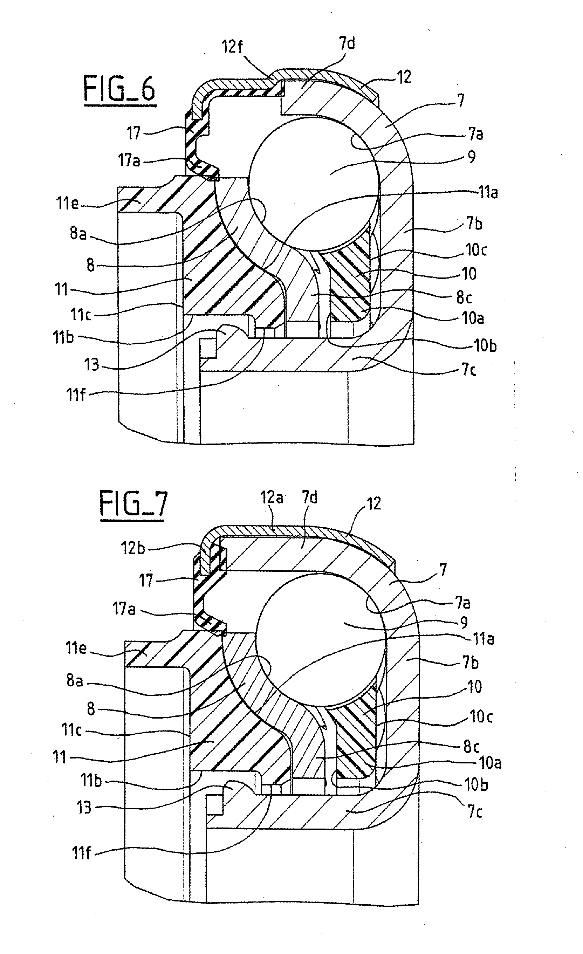

Le mode de réalisation illustré sur la figure 5 se rapproche de celui illustré sur la figure 3, à ceci près que le flasque 12 comprend en outre une deuxième portion axiale 12d de petit diamètre passant par l'alésage de la portion axiale intérieure 7c en prolongement de la portion radiale 12c, et un rebord radial 12e dirigé vers l'extérieur à partir de l'extrémité de la portion axiale intérieure 12d opposée à la portion radiale 12c et en saillie radialement vers l'extérieur à partir de la surface extérieure de la portion axiale intérieure 7c pour pouvoir interagir avec le bourrelet 11f du manchon 11, assurant ainsi une fonction de retenue axiale des éléments de la butée axiale 4. Dans ce cas, la paroi axiale intérieure 7c est dépourvue d'ergot.

Le mode de réalisation illustré sur la figure 6 se rapproche de celui illustré sur la figure 2, à ceci près que la paroi axiale extérieure 7d de la bague extérieure 7 est nettement plus courte. Le flasque 12 fixé sur la bague extérieure 7 supporte un joint d'étanchéité 17 sous la forme d'une garniture en matière souple recouvrant l'alésage du flasque 12 et venant en contact avec l'extrémité libre de la paroi axiale extérieure 7d de la bague extérieure 7 pour assurer une étanchéité statique et se terminant à son extrémité opposée par une lèvre souple 17a en contact de frottement sur la surface périphérique 11d du manchon 11 ainsi que sur la surface axiale formant l'extrémité de grand diamètre de la bague intérieure 8 pour assurer l'étanchéité dynamique entre la bague extérieure 7 et la bague intérieure 8. En vue d'un positionnement convenable du flasque 12 sur la bague extérieure 7, le flasque 12 est pourvu d'une déformation 12f formant une courte portion tronconique axialement au droit de l'extrémité libre de la paroi axiale extérieure 7d. On assure ainsi une excellente étanchéité de la butée axiale 4 contre les fuites de graisse ainsi que contre l'intrusion d'éléments étrangers tels que des particules métalliques.

Le mode de réalisation illustré sur la figure 7 se rapproche de ceux illustrés sur les figures 2 et 6. La bague extérieure 7 est identique à celle illustrée sur la figure 2. Le flasque 12 comprend une courte portion radiale 12b décalée par rapport à l'extrémité libre de la paroi axiale extérieure 7d de la bague extérieure 7. Une garniture d'étanchéité souple est surmoulée sur ladite courte portion radiale 12b et vient en contact avec ladite extrémité libre de la paroi axiale extérieure 7d pour assurer l'étanchéité statique et possède une lèvre 17a semblable à celle illustrée sur la figure 6.

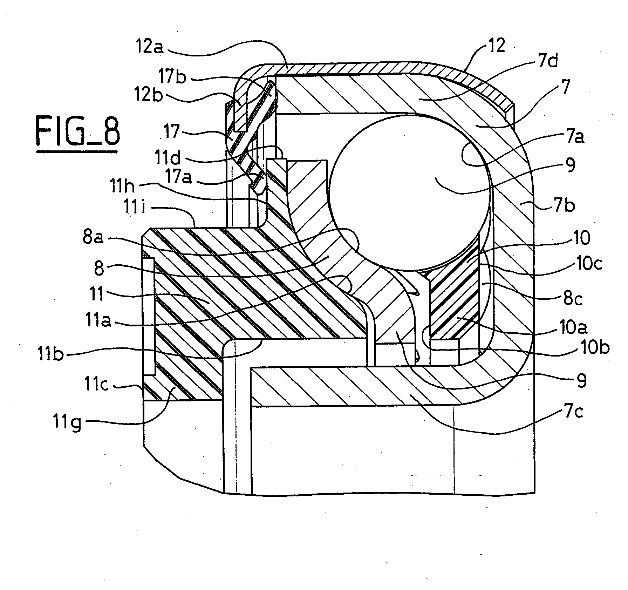

Le mode de réalisation illustré sur la figure 8 se rapproche de celui illustré sur la figure 7. Le joint d'étanchéité 17 comprend, outre la lèvre souple 17a, une lèvre souple 17b en contact statique avec l'extrémité libre de la paroi axiale extérieure 7d de la bague extérieure 7. La portion axiale intérieure 7c est dépourvue d'ergot. Le manchon annulaire 11 comprend un corps en saillie axiale par rapport à l'extrémité libre de la paroi axiale intérieure 7c et une protubérance radiale 11g en saillie radiale vers l'intérieur et présentant un alésage proche de l'alésage de la paroi axiale intérieure 7c. La surface périphérique axiale 11d du manchon 11 présente une faible longueur axiale et est limitée par une surface radiale 11h sur laquelle porte la lèvre souple 17a qui assure également la retenue axiale des éléments de la butée 4. Le manchon 11 comprend une surface axiale 11i s'étendant entre les surfaces radiales 11c et 11h, et de diamètre voisin du diamètre du cercle fictif passant par le centre des éléments roulants 9.

L'invention permet de disposer d'une butée axiale de faible longueur axiale, de coût de revient raisonnable grâce à l'utilisation de bagues embouties, tout en présentant une durée de vie très nettement supérieure aux dispositifs utilisés précédemment et en étant particulièrement silencieuse.

En outre, la butée axiale est indémontable, grâce au moyen de retenue axiale prévu sur le manchon et sur la bague extérieure ou sur le flasque associé à la bague extérieure. La butée axiale présente une masse totale faible, grâce à la faible épaisseur des bagues de roulement.

Bien entendu, on comprend qu'il est possible de combiner les différents modes de réalisation illustrés ici à titre d'exemples.

On pourrait ainsi prévoir de munir les flasques illustrés sur les figures 2, 3, 4 ou 5 de lèvres souples, ou encore de prévoir un manchon fixé par exemple par surmoulage ou collage sur la bague intérieure, et une bague intérieure interférant diamétralement avec l'ergot de la bague extérieure ou avec le flasque afin d'assurer la retenue axiale. On peut également prévoir une bague intérieure à section en U, et une bague extérieure disposée dans la bague intérieure.

Vu la faible amplitude des oscillations angulaires relatives des bagues du roulement, on pourrait envisager à titre de variante de ne pas utiliser de cage pour l'espacement circonférentiel des billes et de disposer simplement des billes jointives dans le sens circonférentiel.

## Revendications

1. Dispositif de butée axiale (4) de volant d'inertie, **caractérisé en ce qu'**il comprend un roulement pourvu de bagues (7, 8) d'épaisseurs sensiblement constantes en tôle, disposé entre deux plateaux dudit volant d'inertie.

2. Dispositif selon la revendication 1, **caractérisé par le fait que** le roulement comprend un manchon (11) d'appui en contact avec la bague intérieure (8).

3. Dispositif selon la revendication 2, **caractérisé par le fait que** la bague extérieure (7) comprend des moyens de retenue axiale du manchon (11), lesdits moyens étant intégrés ou rapportés sur la bague extérieure.

4. Dispositif selon la revendication 2 ou 3, **caractérisé par le fait que** le manchon (11) est pourvu d'une face avant en concordance de forme avec la surface arrière de la bague intérieure (8), du côté opposé à des éléments roulants (9).

5. Dispositif selon l'une quelconque des revendications 2 à 4, **caractérisé par le fait que** le manchon (11) comprend une surface d'appui sensiblement radiale (11c) venant en contact avec une surface rapportée ou intégrée à un plateau du volant d'inertie.

6. Dispositif selon l'une quelconque des revendications 2 à 5, **caractérisé par le fait que** le manchon (11) comprend des moyens de centrage de la butée sur une portion rapportée ou intégrée à un plateau du volant d'inertie.

7. Dispositif selon l'une quelconque des revendications précédentes, **caractérisé par le fait que** la bague extérieure (7) comprend une portion frontale sensiblement radiale (7b) sur laquelle viennent se raccorder une portion axiale cylindrique extérieure (7d) et une portion axiale cylindrique intérieure (7c), ladite portion axiale cylindrique intérieure étant d'un diamètre inférieur à l'alésage de la bague intérieure (8) et s'étendant dans la même direction que la portion axiale cylindrique extérieure pour recouvrir axialement au moins en partie la bague intérieure (8).

8. Dispositif selon la revendication 7, **caractérisé par le fait que** la portion axiale cylindrique intérieure (7c) de la bague extérieure (7) comprend au moins un ergot (13) en saillie vers l'extérieur disposé à proximité de l'extrémité libre de ladite portion axiale intérieure.

9. Dispositif selon la revendication 7 ou 8, **caractérisé par le fait que** le roulement comprend un flasque (12) en contact avec la surface extérieure de la portion axiale extérieure (7d) de la bague extérieure (7) et pourvu d'un rebord (12b) s'étendant radialement vers l'intérieur.

10. Dispositif selon la revendication 9, **caractérisé par le fait que** le flasque (12) comprend en outre une portion sensiblement radiale (12c) en contact avec la portion frontale (7b) de la bague extérieure (7).

11. Dispositif selon la revendication 10, **caractérisé par le fait que** le flasque (12) comprend en outre une portion axiale (12d) s'étendant parallèlement à la portion axiale intérieure (7c) de la bague extérieure (7), et un rebord d'extrémité (12e) dirigé radialement vers l'extérieur, ledit rebord (12e) étant apte à former un moyen de retenue axiale d'éléments disposés dans la bague extérieure (7).

12. Dispositif selon l'une quelconque des revendications 9 à 11, **caractérisé par le fait que** le flasque (12) comprend un joint souple (17) venant en contact avec la bague intérieure (8).

13. Dispositif selon l'une quelconque des revendications précédentes, **caractérisé par le fait que** le manchon (11) comprend un insert métallique (16) en contact avec un plateau du volant d'inertie.

14. Dispositif selon l'une quelconque des revendications précédentes, **caractérisé par le fait que** le roulement comprend une cage (10) de maintien circonférentiel des éléments roulants, ladite cage étant pourvue d'un talon annulaire (10a) délimité axialement par deux faces parallèles (10b, 10c) et disposé radialement à l'intérieur de la rangée d'éléments roulants (9).

15. Dispositif selon les revendications 1 à 13, **caractérisé par le fait que** les éléments roulants sont sensiblement jointifs, le roulement ne comportant pas de cage.

16. Volant d'inertie comprenant deux plateaux et une butée axiale disposée entre les plateaux, **caractérisé par le fait que** la butée axiale comprend un roulement pourvu de bagues intérieure et extérieure d'épaisseur sensiblement constante.
